# EUROPEAN PATENT APPLICATION

(11) **EP 1 820 780 A1**
(43) Date of publication of application: **22.08.2007**
(21) Application number: 07250636.3
(22) Date of filing: 15.02.2007
(51) Int. Cl.: C02F 1/00

(54) **Reservoir management system**

(30) Priority: 15.02.2006 US 773571 P
(71) Applicant: Severn Trent Water Purification, Inc.,, FT. Washington, Pennsylvania, 19034 (US)
(72) Inventor: Routh, Julian, Sutton Coldfield West Midlands, B73 5QN (GB); Ahrens, Earl, Rancho Palos Verdes California 90275 (US)
(74) Representative: Makovski, Priscilla Mary

(57) **Abstract**

A reservoir management system for a water reservoir (10) has inlet and outlet piping (68) and means for adding chemicals in controlled amounts to the water within the reservoir. One or more eductors (20) are positioned within the water reservoir to mix and circulate water within the reservoir. A recirculating pump (66) is located externally to the reservoir and has an inlet line (62) that taps into the outlet piping from the reservoir. One or more sample lines (28) remove test streams of water from the reservoir which are analyzed by an analyzer (30) to determine the level of at least one chemical in the test stream to provide a chemical-related signal. A controller (34) receives the signals and compares the signal to a set point indicative of the level of chemical desired within the reservoir, the controller (34) then operates to maintain, increase, or decrease the amount of chemical added to the water within the reservoir in controlled amounts. A flow meter (90) monitors the rate of flow into the reservoir and retention time of water and generates one or more signals to the controller as the rate of flow varies from a set point.

## Description

### FIELD OF THE INVENTION

The present invention relates to a water reservoir management system and method, more particularly to a system and method for controlling the levels of additives to the water within the reservoir as well as temperature uniformity within the reservoirs.

### BACKGROUND

Water-containing reservoirs require management of temperature gradients and microbe development to ensure high quality water for dispensing to municipalities and the like. Reservoirs have a problem with water at or near its surface that can become quite warm during the summer months, particularly in temperate zones. Make-up water usually is colder and, while it may reduce the temperature, is not very effective and, instead, make-up water can short-circuit the retained water in the reservoir. Temperature gradients accompanied by ineffective mixing of disinfectant chemicals result. Stagnation and stratification can occur because of the limited area, below and above the surface, that is circulated by existing reservoir management systems. Circulation of make-up water and added chemicals throughout the reservoir is spotty and limited resulting in inconsistent water quality.

Recirculating pumps are necessary to reduce the temperature gradients and mix chemicals. Pumps mounted within the reservoir, along with their associated piping are problematic when break downs and corrosion occur. Repairs require either emptying of the reservoir, a time consuming and costly project, or special equipment or such as scuba outfits for workers to repair or replace the equipment. Often times, especially in smaller reservoirs, these repairs are unwieldy and difficult to do because of the lack of space to work on the equipment.

Another worrisome aspect of managing reservoirs, especially since the increase of terrorist attacks, is security of the reservoir to prevent tampering with the water supply. Although many man-made reservoirs and tanks are covered, equipment including piping is often exposed and vulnerable to tampering.

Among other issues encountered in maintaining the quality of water within a reservoir is how the rate of flow of water into a reservoir affects chemical treatment. The amount of water flowing into the reservoir depends on a variety of external factors such as water usage by customers, the availability of bulk water supply and the production of waste water requiring treatment. Increases or decreases of flow into the reservoir affect the retention times of the water within the reservoir. Variations in flow rate affect the quantity of chemical treatment as well as stagnation times of the reservoir water.

As a consequence of the limitations of the existing systems and methods, there is a need for an improved method and system for managing or controlling a body of water contained in a reservoir to ensure uniformity of temperature, security of the system and the integrity of the quality of water within the reservoir so as to ensure high quality of water for dispensing therefrom.

### SUMMARY

The present invention is directed towards a reservoir management system and method for controlling water impurity levels and temperature uniformity within water-containing reservoirs. Advantageously, this invention has an external pump assembly to facilitate the maintenance and repair of the reservoir system as well as provide a safety factor of securely enclosing the pump and its associated equipment and piping. A further advantage is that, in one embodiment, the pump is hooked up to the reservoir with two connections thereby simplifying installation and repairs. Another feature of the present invention is a flow meter that monitors the rate of flow of additional water into the reservoir and retention time of water within the reservoir. This data increases the accuracy of the analysis of the chemical composition of reservoir water to more accurately determine the quantity and quality of necessary chemical additives to reservoir waters.

One embodiment of the present invention comprises a reservoir management system for a water reservoir and an external pump assembly. The system comprises inlet and outlet piping and means for adding chemicals in controlled amounts to the water within the reservoir. One or more eductors are positioned within the water reservoir to mix and circulate water within the reservoir. A recirculating pump is located externally to the reservoir and has an inlet line that taps into the outlet piping from the reservoir. One or more sample lines remove test streams of water from the reservoir which are analyzed to determine the level of at least one of chemical in the test stream to provide a chemical-related signal. A controller receives the signal and compares the signal to a set point indicative of the level of chemical desired within the reservoir to maintain, increase, or decrease the amount of chemical added to the water within the reservoir in controlled amounts. A flow meter monitors the rate of flow into the reservoir and retention time of water and generates one or more signals to the controller as the rate of flow varies from a set point.

In another embodiment of reservoir system, the external recirculating pump can be located adjacent one side of the reservoir, on top of a cover of the reservoir or on a floatation device floating on top of the water within the reservoir. Alternatively, the recirculating pump is located adjacent the base of the reservoir, preferably at ground level. The eductor can be adapted for positioning adjacent the inlet piping within the reservoir or movable throughout the reservoir. Chemicals added to the reservoir include at least one of ammonia, hypochlorite, and chlorine. A chemical dosing system provides a controlled source of required chemical for addition to the reservoir according to a signal emitted by the controller.

In one aspect, a chemical dosing line transports chemicals to the reservoir. An outlet line extends from the recirculating pump to the reservoir and the chemical dosing line is tapped into the outlet line. The chemical dosing line transports chemicals directly from the chemical dosing system to the reservoir. Preferably, a sample line taps into the recirculating pump outlet line to carry the test stream of water to the analyzer. The sample line connects the analyzer to the reservoir to carry the test stream of water from the reservoir to the analyzer. The analyzer determines the level of at least one of chlorine and chloramine in the test stream to provide a chlorine or chloroamine related signal. The controller receives the signal and for comparing the signal to a set point indicative of the level of chlorine or chloroamine desired within the reservoir. Preferably, the controller is designed to maintain, increase, or decrease the amount of ammonia, hypochlorite or chlorine added to the water within the reservoir. One aspect of a preferred embodiment comprises means for adding chemicals in controlled amounts to the water within the reservoir. Preferably, a chemical dosing system provides a controlled source of ammonia, hypochlorite and chlorine for addition to the reservoir according to a signal emitted by the controller.

In another embodiment of the invention, a flow meter monitors the rate of flow into the reservoir and retention time of water within the reservoir, the flow meter providing one or more signals to the controller as the rate of flow varies from a set point. The chemicals added to the reservoir can also comprise pH control additives, disinfectants other then ammonia and chlorine derivatives, fluorides and phosphates. Beneficially, especially in areas subject to terror attacks, the reservoir management system can also comprise a securable housing for enclosing the recirculating pump, the sample line, the inlet and outlet piping system, the analyzer and the controller.

One preferred method for managing a water reservoir comprises treating the water within the reservoir by adding chemicals in controlled amounts. The reservoir is adapted to comprise inlet and outlet piping. One or more eductors are positioned within the water reservoir, the one or more eductors designed to mix and circulate water within the reservoir to disperse the chemicals and avoid temperature gradients. Water is recirculated throughout the reservoir by means of a recirculating pump located external to the reservoir. An inlet line to the recirculating pump is tapped into the outlet pipe of the reservoir and the outlet line from the recirculating pump transports high pressure water from the pump to a location approximate the ejector. A test stream of water from the reservoir is sampled by removing the test sample through a sample line. The level of at least one of the chemicals in the test stream is analyzed to provide a chemical-related signal; and the chemical-related signal is then sent to a controller to compare the signal to a set point indicative of the level of chemical desired within the reservoir. The controller then determines the type and amount of chemical required to be added to the reservoir. Alternatively, the type and amount of chemical can be determined manually. One or more chemicals as determined during the analysis are added to the reservoir. The level of the one or more chemicals within the reservoir is controlled by maintaining, increasing, or decreasing the amount of chemical added to the chemical dosing line. The rate of flow of additional water into the reservoir and retention time of water within the reservoir can be monitored. One or more signals are sent to the controller as the rate of flow varies from a set point.

### DRAWINGS

Fig. 1 is one embodiment of the reservoir management system showing a pump on one side of a reservoir tank.
Fig. 2 illustrates the reservoir management system having a pump on top of a reservoir cover.
Fig. 3 illustrates the reservoir management system having a pump floating on top of a reservoir.
Fig. 4 illustrates another embodiment of the reservoir management system having a flow meter.
Figs. 5A and 5B are embodiments of the invention showing various positions of the flow meter in the reservoir management system.
Figs. 6A and 6B illustrate the various embodiments of the inlet/outlet piping and flow meter.

### DETAILED DESCRIPTION

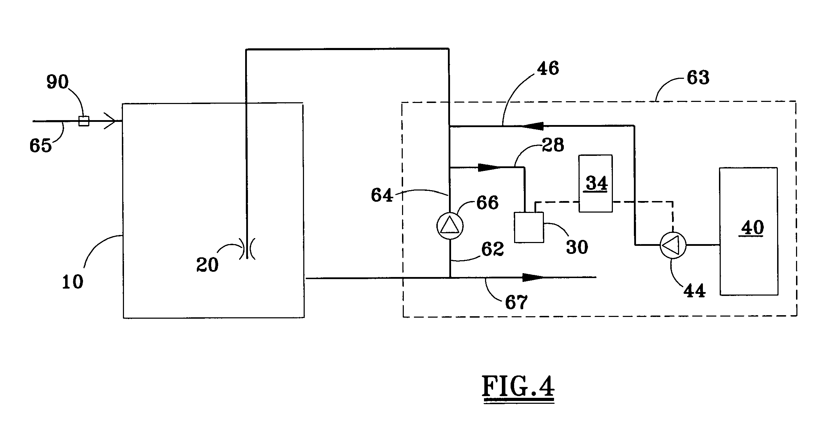

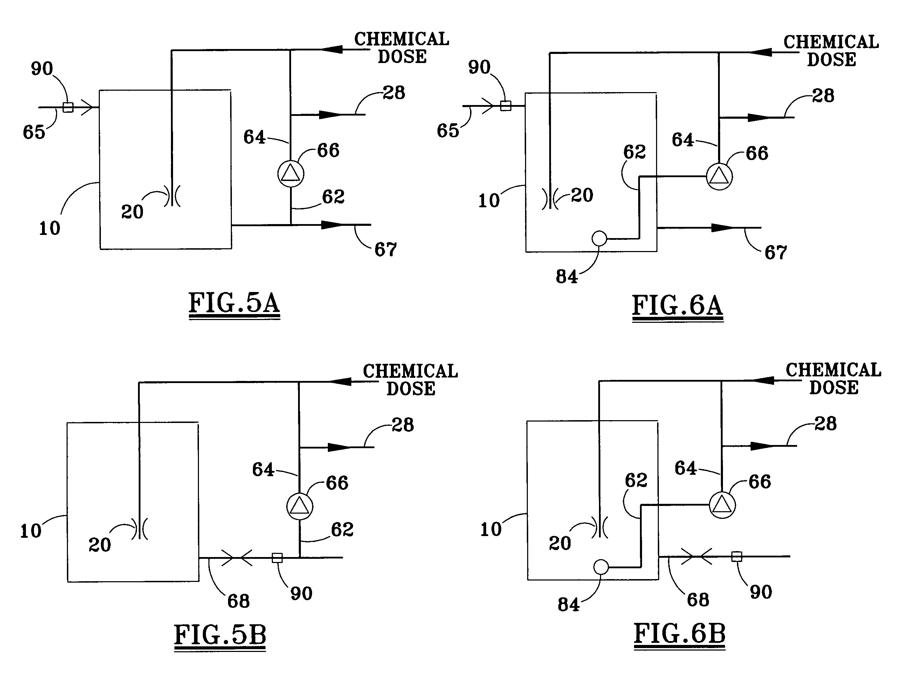

Figure one of the present invention illustrates a reservoir management system for a water storage and treatment reservoir 10 having a pump 66 that is external to the reservoir 10. One advantage of an external pump 66 is that it facilitates management and repair of the reservoir system. The external pump 66 also provides an opportunity for increased security to the pump equipment and overall system and can be quickly and easily installed. One embodiment of this invention requires just two connections to hook up the pump system 66. In another aspect of the invention, an external pump 66 and its associated piping and equipment can be locked within a securable housing 63 to avoid tampering with any of the equipment and chemicals. Repair is facilitated because of the easy access to the pump equipment. Another advantage of the present invention is shown in Figs. 4-6, which illustrate a flow meter 90 hooked into an inlet piping 65 or a combined inlet/outlet piping 68 of the reservoir system. Various flow meters are readily available including flow meters that can measure flow in both directions and either give two output signals or a separate signal indicating direction of flow. The signal would be used for control when flow into the reservoir occurs. The flow meter 90 measures increases and decreases in the influent flow to the reservoir, thereby determining the retention time of water within the reservoir. Increases in flow and variations in retention time affect the amounts of treatment chemicals added to the reservoir. By sending a signal from the flow meter 90 to the control system of the reservoir management system (hereinafter, RMS), the amount of chemicals added is adjusted to accommodate the change in flow and retention time.

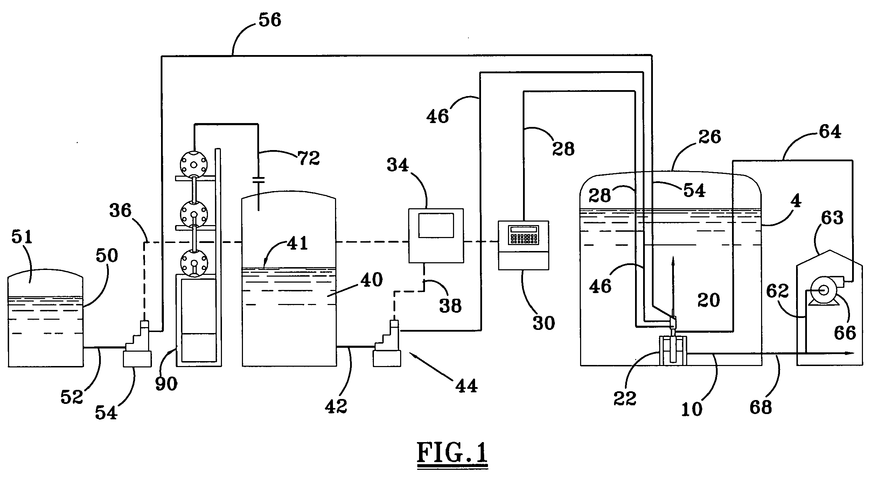

As shown in Figs. 1, 5B and 6B, one embodiment of a water reservoir 10 having an external pump system 66 comprises a combined inlet/outlet piping 68. Another embodiment of a water reservoir 10 having an external pump system comprises an inlet piping 65 and an outlet piping 67, as shown in Figs. 4, 5A, and 6A. Additional inlet or outlet piping may be used when required. Preferably, the RMS has a means for adding chemicals in controlled amounts to the water within the reservoir. Figure 1 illustrates one embodiment of the chemical supply systems. Various chemical supply systems can be used including, but not limited to the supply units illustrated. Figure 1 shows an ammonia chemical supply system and a hypochlorite chemical supply system.. Ammonia 51 is stored in an ammonia storage tank 50 and removed through an ammonia pump inlet piping 52. Figure 1 also shows a hypochlorite generator 70, which releases hypochlorite 41 through a hypochlorite generator outlet piping 72 and stores the hypochlorite 41 in a hypochlorite storage tank 40. The hypochlorite 41 is removed from the hypochlorite storage tank 40 through the hypochlorite pump inlet piping 42. A chiller tank can be used to chill and store ammonia. One possible hypochlorite generator 70 that can be used with the RMS of this invention is disclosed in US Patent No. 6,805,787. Chlorine generators as well as supply systems for other required chemicals can be included as part of the RMS. In addition to ammonia, hypochlorite and chlorine, the other chemicals comprise pH control additives, additional disinfectants, fluorides, phosphates as well as other chemicals known and used for water treatment.

Reservoirs range in size from small tanks holding less than 1000 gallons to super sized municipal reservoirs having upward of 10 million gallon capacities. Both larger reservoirs and sometimes smaller reservoirs having a slow rate of influent have areas within the reservoir where stagnation and temperature gradients can occur. To combat this problem, one or more eductors 20 or flow inducers are positioned within the water reservoir 10. The one or more eductors 20 are designed to mix and circulate water to reduce stagnation and temperatures gradients as well as to mix the chemicals as they are added to the reservoir. In one embodiment of this invention, the eductor 20 is stationary and positioned adjacent the inlet piping to the reservoir so that influent streams are mixed with chemicals as they are introduced into the reservoir 10. The stationary eductor 20 can be attached to a pole and lowered into reservoir. Alternatively, the one or more eductors 20 are movable within the water reservoir 10 to mix and circulate water, especially within larger reservoir systems. As shown in Figs. 1-3, a submersible ballast system 22, such as available from Severn Trent Systems- Water Purification division, can be used for moving eductors 20 throughout the reservoir.

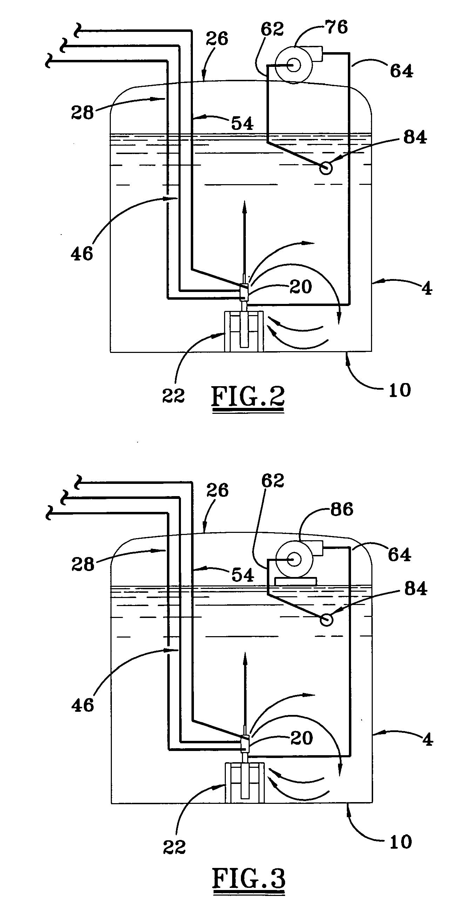

In one embodiment of this invention, the eductor 20 is positioned within the jet of water discharged from the pump 66. With the external recirculating pump 66, the pump is located outside of the reservoir and can be positioned adjacent one side 4 of the reservoir (Fig. 1) or near the reservoir top 26. Various locations include on top of a cover of the reservoir 76 (Fig, 2) or on a floatation device 86 floating on top of the water within the reservoir (Fig. 3). In other embodiments, the recirculating pump can be located adjacent the base of the reservoir, either at ground level or, in some cases, below ground level for sunken reservoirs.

In one aspect of the invention, the external recirculating pump has an inlet line 62 bringing water from the reservoir into the pump and an outlet line 64 for transporting water under pressure from the pump back to the reservoir. In one embodiment of the invention as shown in Fig. 1, the inlet line 62 taps into the combined inlet/outlet piping 68 from the reservoir so that a partial amount of the treated water leaving the reservoir is sent to the pump to be pressurized and re-circulated back into the reservoir. The outlet line 64 leads from the recirculating pump to a position approximate the eductor so that treated water from the pump is ingested by the eductor and re-circulated within the reservoir. In an alternative embodiment of the invention, shown in Figs 2-3, the inlet line 62 taps into a suction pipe 84 located within the reservoir 10. In one embodiment of this invention, a sample line 28 removes a test stream of water from the reservoir and sends it to an analyzer 30. The sample line 28 can tap into the pump outlet line 64 and carry the previously treated water to analyzer 30, as shown in Fig. 4. In an alternative system, the sample line 28 can be positioned above the one or more eductors 20 within the reservoir 10 to transmit the treated water to the analyzer 30 so that the analyzer 30 determines the make-up of the treated water, as shown in Figs. 1-3. The analyzer 30 determines the level of at least one of the chemicals in the test stream and emits a chemical-related signal.

Preferably, the analyzer 30 can determine the levels of multiple chemicals and emit multiple signals to a controller 34. The controller 34 receives the signal and compares the signal to a set point indicative of the level of chemical desired within the reservoir. The controller 34 is designed to maintain, increase, or decrease the amounts of chemical added to the water within the reservoir 10 in controlled amounts. In one embodiment of the invention as shown in Fig. 1, the controller 34 emits an ammonia signal 36 and a hypochlorite signal 38 to the ammonia pump 54 and hypochlorite pump 44, respectively, to adjust the ammonia dosing line 56 and the hypochlorite dosing line 46 into the reservoir 10.

Various chemicals and additives are required to treat and maintain the water within the reservoir 10. Some of the more common chemicals added to the reservoir are at least one of ammonia, hypochlorite, and chlorine. Other chemicals added to the reservoir comprise pH control additives, additional disinfectants, fluorides and phosphates. One or more chemical dosing systems provide a controlled source of the one or more required chemicals for addition to the reservoir according to the signals emitted by the controller. Some chemicals can be manufactured on site and either used immediately or stored for future use.

Others are transported to the reservoir area and stored in tanks. One or more chemical dosing lines transport chemicals from the storage tanks to the reservoir. In one embodiment as illustrated in Fig. 4, the hypochlorite dosing line 46 taps into the outlet line 64 coming from the recirculating pump. Alternatively, as seen in Fig. 1, the ammonia dosing line 56 and the hypochlorite doping line 46 transport chemicals directly from the ammonia pump 54 and hypochlorite pump, respectively, to the reservoir. In either embodiment, the chemicals to be dosed enter the reservoir approximate the eductor so that the jet stream exiting from the eductor mixes with the chemicals and provides good circulation of the chemicals within the reservoir water.

The amount of water flowing into a reservoir 10 varies depending on the rain fall, waste water production and other factors. If the flow rate slows down, less chemical is required, and vice versa, more is needed during heavy flows into the reservoir. The retention rate of water within the reservoir similarly affects chemical dosing requirements. Advantageously, as shown in Fig. 4, this invention comprises a flow meter 90 to monitor the rate of flow of water into the reservoir 10 and subsequently, the retention time of water within the reservoir 10. The flow meter 90 generates one or more signals and emits the signals to the controller 34 as the rate of flow varies from a set point. The flow meter 90 along with the chemical analyzer 30 both give data that more accurately reflects how much chemical is required to be dosed into the reservoir.

One of the benefits of having an external recirculating pump 66 is security. To avoid tampering with the water supply, a securable housing 63, as shown in Fig. 4, can enclose the recirculating pump 66 , the sample line 28, outlet piping system 67, the analyzer 30 and the controller 34. Alternatively, a securable housing 63 can enclose the combined inlet/outlet piping 68 and the recirculating pump 66 as shown in Fig. 1. In some instances where greater security is desired, much of the associate reservoir management equipment can be located within the secured housing, including the hypochlorite generator, storage tanks and associated equipment.

The present invention also relates to a method for managing a water reservoir. During the method, water within the reservoir is treated by adding chemicals in controlled amounts. The reservoir is adapted to comprise inlet and outlet piping. One or more eductors or flow inducers are positioned within the water reservoir and are designed to mix and circulate water so as disperse the chemicals and avoid temperature gradients. Water is recirculated throughout the reservoir by means of a recirculating pump. In one embodiment, the pump is located external to the reservoir. Alternatively, the pump is internal and submerged within the reservoir. An internal recirculating pump ingests water directly from the reservoir and discharges the water at a point remote from the ingesting point. The eductor 20 is positioned within the jet of water discharged from the pump. An external recirculating pump can be positioned at various points outside of the reservoir depending on the site location. It can be on a side of the reservoir or on top.

If the recirculating pump is external to the reservoir, an inlet line to the recirculating pump is tapped into the outlet pipe of the reservoir and an outlet line between the recirculating pump and the reservoir is used for transporting high pressure water from the pump to a location approximate the eductor 20. During this method, a test stream of water from the reservoir is sampled by first removing a test sample through a sample line. The level of at least one of the chemicals in the sampled test stream is analyzed and a chemical-related signal regarding the level of chemical is generated. The chemical-related signal is then sent to a controller and the signal is compared to a set point indicative of the level of chemical desired within the reservoir. The type and amount of chemical required to be added to the reservoir is determined and one or more chemicals are added to the reservoir. One or more chemical dosing lines transport chemicals directly from the chemical dosing system to the reservoir. In this way, the level of the one or more chemicals within the reservoir is controlled by maintaining, increasing, or decreasing the amount of chemical added to the reservoir through the chemical dosing lines.

Another aspect of the present invention comprises monitoring the rate of flow of additional water into the reservoir and retention time of water within the reservoir. One or more signals are generated by the flow meter and sent to the controller as the rate of flow varies from a set point. A flow meter measures the increases and decreases in the influent flow to the reservoir, thereby determining the retention time of water within the reservoir. Increases in flow and variations in retention time affect the amounts of treatment chemicals added to the reservoir. By sending a signal from the flow meter to the control system of the reservoir management system, the amount of chemicals added is adjusted to accommodate the change in flow and retention time.

The foregoing description is illustrative and explanatory of preferred embodiments of the invention, and variations in the size, shape, materials and other details will become apparent to those skilled in the art.

## Claims

1. A reservoir management system for a water reservoir, the water reservoir (10) including an inlet piping (65,68) and an outlet piping (67,68), the reservoir management system comprising:
a means for adding chemicals in controlled amounts to the water within the reservoir;
one or more eductors (20) positioned within the water reservoir, the one or more eductors being designed to mix and circulate water within the reservoir;
a recirculating pump (66) located externally to the reservoir, the recirculating pump including an inlet line (62), the inlet line being adapted to tap into the outlet piping from the reservoir;
a sample line (28) for removing a test stream of water from the reservoir;
an analyzer (30) for determining the level of at least one chemical in the test stream to provide a chemical-related signal; and
a controller (34) for receiving the signal and for comparing the signal to a set point indicative of the level of chemical desired within the reservoir, the controller being designed to maintain, increase, or decrease the amount of chemical added to the water within the reservoir in controlled amounts.

2. The reservoir management system of claim 1 wherein the external recirculating pump (66) is located adjacent one side of the reservoir, or on top of a cover (76) of the reservoir or on a floatation device (86) floating on top of the water within the reservoir.

3. The reservoir management system of claim 1 or claim 2 wherein the recirculating pump (66) is located adjacent the base of the reservoir.

4. The reservoir management system of claim 1 or claim 2 wherein the recirculating pump (66) is located at ground level.

5. The reservoir management system of any preceding claim wherein the or each eductor (20) is adapted to be located adjacent the inlet piping (65,67) within the reservoir.

6. The reservoir management system of any preceding claim wherein the or each eductor (20) is movable within the reservoir.

7. The reservoir management system of any preceding claim wherein the chemicals added to the reservoir are at least one of ammonia, hypochlorite, and chlorine.

8. The reservoir management system of any preceding claim including a chemical dosing system to provide a controlled source of required chemicals for addition to the reservoir (10) according to a signal emitted by the controller (34).

9. The reservoir management system of claim 8 further comprising one or more chemical dosing lines (46,56) to transport the one or more chemicals to the reservoir.

10. The reservoir management system of claim 9 further comprising an outlet line (64) from the recirculating pump (66) to the reservoir (10) wherein at least one chemical dosing line (46,56) is tapped into the outlet line (64).

11. The reservoir management system of claim 10 wherein the sample line (28) taps into the recirculating pump outlet line (64) to carry the test stream of water to the analyzer (30).

12. The reservoir management system of any of claims 1 to 10 wherein the sample line (28) connects the analyzer (30) to the reservoir (10) to carry the test stream of water from the reservoir to the analyzer.

13. The reservoir management system of any preceding claim including a flow meter (90) to monitor the rate of flow into the reservoir and retention time of water within the reservoir, the flow meter generating one or more signals to the controller (34) as the rate of flow varies from a set point.

14. The reservoir management system of any preceding claim wherein the chemicals added to the reservoir are at least one of pH control additives, disinfectants, fluorides and phosphates.

15. The reservoir management system of any preceding claim, wherein;
the one or more eductors (20) are positioned within the reservoir (10) adjacent the inlet piping (65,68), and the outlet line (64) from the recirculating pump (66) leads to a position approximate an eductor.

16. The reservoir management system of any of claims 8 to 15 wherein one or more eductors (20) are movable within the reservoir;
the recirculating pump (66) has an outlet line (64) leading to the reservoir;
the sample line (28) is connected from a position above the one or more eductors (20) within the reservoir to the analyzer (30); and
one or more chemical dosing lines (46,56) transport chemical from the chemical dosing system to a position approximate the or each eductor (20).

17. The reservoir management system of any of claims 8 to 16 further comprising a securable housing (63) for enclosing the recirculating pump (66), the sample line (28), the inlet and outlet piping system (68), the analyzer (30), the chemical dosing system and the controller (34).

18. The reservoir management system of any preceding claim including means for producing and storing the chemicals required to treat the reservoir water, the means for producing and storing the chemicals being located adjacent the reservoir.

19. The reservoir management system of claim 18 wherein the means for producing and storing the chemicals required to treat the reservoir water comprises an ammonia storage tank, a hypochlorite generator and a hypochlorite storage tank.

20. The reservoir management system of any preceding claim wherein the or each eductor (20) is positioned at the inlet piping coming from the recirculating pump (66) so that the reservoir water dosed by the chemical dosing system is mixed and circulated throughout the reservoir.

21. The reservoir management system of any preceding claim wherein the recirculating pump (66) discharges a jet of water and ingests water at a point remote from the discharge, and the or each eductor (20) is positioned within the jet of water discharged from the pump (66).

22. The reservoir management system of any preceding claim wherein the means for adding chemicals comprises means for adding at least one of ammonia, hypochlorite, and chlorine in controlled amounts to the water within the reservoir, the means for adding ammonia, hypochlorite and chlorine comprising means for producing ammonia, hypochlorite, or chlorine and means (50,40) for storing ammonia, hypochlorite, or chlorine, the means for producing and means for storing being located adjacent the reservoir;
the recirculating pump (66) has an outlet line (64), the inlet line (62) being adapted to tap into the outlet piping (67,68) from the reservoir;
the analyzer (30) is connected to the sample line (28) for determining the level of at least one of chlorine and chloramine in the test stream to provide a chlorine or chloroamine related signal;
the controller (34) indicates the level of chlorine or chloroamine desired within the reservoir, the controller being designed to maintain, increase, or decrease the amount of ammonia, hypochlorite or chlorine added to the water within the reservoir; and a
chemical dosing system provides a controlled source of ammonia, hypochlorite and chlorine for addition to the reservoir according to a signal emitted by the controller (34).

23. A method for managing a water reservoir comprising:
(a) treating the water within the reservoir by adding chemicals in controlled amounts, the reservoir being adapted to include inlet and outlet piping (65,67,68);
(b) positioning one or more eductors (20) within the water reservoir, the one or more eductors being designed to mix and circulate water within the reservoir to disperse the chemicals and avoid temperature gradients;
(c) recirculating the water throughout the reservoir by means of a recirculating pump (66) located external to the reservoir, an inlet line (62) to the recirculating pump (66) being tapped into the outlet piping (67,68) of the reservoir, an outlet line (64) from the recirculating pump (66) transporting high pressure water from the pump to a location approximate at least one eductor (20);
(d) sampling a test stream of water from the reservoir by removing a test sample through a sample line (28);
(e) analyzing the level of at least one of the chemicals in the test stream to provide a chemical-related signal; and
(f) sending the chemical-related signal to a controller (34) to compare the signal to a set point indicative of the level of chemical desired within the reservoir;
(g) determining the type and amount of chemical required to be added to the reservoir;
(h) adding one or more chemicals as determined in step (g) to the reservoir; and
(i) controlling the level of the one or more chemicals within the reservoir by maintaining, increasing, or decreasing the amount of chemical added to a chemical dosing line.

24. The method of claim 23 further comprising monitoring the rate of flow of additional water in to the reservoir and retention time of water within the reservoir and generating one or more signals to the controller as the rate of flow varies from a set point.
